# EUROPÄISCHE PATENTSCHRIFT

(11) **EP 2 293 856 B1**
(45) Veröffentlichungstag und Bekanntmachung des Hinweises auf die Patenterteilung: **15.08.2012**
(21) Anmeldenummer: 09745439.1
(22) Anmeldetag: 29.04.2009
(51) Int. Cl.: B01D 9/00

(54) **ANORDNUNG UND VERFAHREN ZUR HERSTELLUNG VON HOCHREINEN KRISTALLEN**
ARRANGEMENT AND METHOD FOR PRODUCING HIGH-PURITY CRYSTALS
DISPOSITIF ET PROCÉDÉ DE PRODUCTION DE CRISTAUX DE HAUTE PURETÉ

(30) Priorität: 14.05.2008 DE 102008023833
(43) Veröffentlichungstag der Anmeldung: 16.03.2011
(73) Patentinhaber: Hapila Gmbh, 07552 Gera (DE)
(72) Erfinder: GRAWE, Detlef, 99510 Kleinromstedt (DE); EILERS, Robert, 07745 Jena (DE); GLIESING, Sabine, 07743 Jena (DE)
(74) Vertreter: Donath, Dirk
(86) Internationale Anmeldenummer: PCT/DE2009/000603
(87) Internationale Veröffentlichungsnummer: WO 2009/138055

(56) Entgegenhaltungen:
- US-A- 2 579 421
- US-A- 3 154 395
- US-A- 5 466 266

## Beschreibung

Die vorliegende Erfindung betrifft eine Anordnung und ein Verfahren zur Herstellung von hochreinen Kristallen, bspw. von thermisch sensiblen pharmazeutischen Wirkstoffen, im Gegenstromkristallisationsprozess.

Gattungsgemäße Anordnungen weisen Kristallisatoren auf, die kolonnenartig im Gegenstromprinzip betrieben werden, wodurch ein Trennungseffekt bei in Mutterlagen enthaltenen Substanzen erzeugt wird, welcher die Reinigung dieser Substanzen erlaubt.

Die Reinigung von Substanzen durch Kristallisation ist seit vielen Jahren bekannt. Zur Aufreinigung von Substanzen insbesondere von pharmazeutischen Wirkstoffen ist die Kristallisation immer noch eine der effektivsten Reinigungsmethoden. Sind sehr hohe Endreinheiten (> 99.99%) erforderlich, stößt die konventionelle Kristallisation schnell an ihre Grenzen. In der Praxis liegt oftmals ein komplexes Verunreinigungsprofil mit 5 bis 10 Nebenprodukten vor, die sich im Zielprodukt zwar prinzipiell durch Kristallisation abreichern lassen, jedoch sehr unterschiedliche Abreicherungseigenschaften aufweisen. Eine hohe Endreinheit kann dann nicht in einem Kristallisationsschritt erreicht werden, sondern es muss in mehreren Stufen und Fraktionen kristallisiert werden. Die Reinheit verhält sich dabei umgekehrt proportional zur erzielten Ausbeute. Damit erhöht sich der zeitliche Aufwand und die Ausbeuteverluste wachsen gar exponentiell mit der Stufenzahl. So beträgt beispielsweise nach fünffacher Umkristallisation die Gesamtausbeute bei 70% je Stufe nur noch 17 %. Der größte Teil der Substanz befindet sich in Mutterlaugen. Nur über einen aufwendigen Fraktionierprozess lässt sich ein Teil davon auf die gewünschte Endreinheit bringen.

Auf dem Feld der Destillation und Extraktion ist es durch kontinuierliches Trennen und Vereinigen der Phasen im Gegenstromprozess möglich, die auf den Verteilungsgleichgewichten beruhenden Trenneffekte zu multiplizieren und damit sehr effiziente Trennverfahren zu entwickeln. Diese finden ihre apparative Umsetzung in den Rektifikations - oder Extraktionskolonnen bzw. Mixer-Settler-Anlagen.

Solch ein Gedanke lässt sich prinzipiell auch auf die Kristallisation übertragen, denn auch hier beruht der Trenneffekt (Reinigungseffekt) auf der unterschiedlichen Verteilung der einzelnen Verunreinigungen zwischen den Phasen Kristallisat und Mutterlauge. Doch die technologische Umsetzung des multiplikativen Trenneffektes analog zur Extraktion/Rektifikation ist schwierig, da es sich bei den Phasenübergängen um Fest-Flüssig-Transfers handelt.

Bezüglich der klassischen kontinuierlichen Verfahrensführung in kolonnenartigen Ausrüstungen gibt es eine Reihe von Veröffentlichungen (DE 32 39 244 A1, EP 0242 18 A1, US 3 154 395, US 2 579 421, US 5 466 266, US 4 279 130). Diese Prozesse sind komplex und störanfällig, die dazugehörigen Apparate kompliziert und auf das jeweilige Kristallisationsproblem zugeschnitten. Oftmals haben sie wegen schwieriger Stoffübergangsverhältnisse einen nur geringen Bodenwirkungsgrad (G. Matz, "Fraktionierte Kristallisation", Chemie-Ingenieur-Technik, 52, (1980), Nr.7, S. 562-570). In der industriellen Praxis haben sie sich im Unterschied zu Rektifikations- bzw. Extraktionskolonnen als Standardverfahren nicht durchsetzen können

Die Alternative zur klassischen kontinuierlichen Verfahrensführung in kolonnenartigen Ausrüstungen ist ein mehrstufiger Prozess in getrennten, technologisch gleichartigen Kristallisationseinheiten. Auch dieser kann mehr oder weniger kontinuierlich gestaltet werden.

Es ist eine Reihe von Verfahren und Anlagen zur fraktionierten, mehrstufigen Kristallisation bekannt (siehe bspw. US 4 787 985, US 5 127 921).

Gemäß diesen Offenbarungen werden die Ausbeuteverluste bei vielfachem Kristallisieren durch eine Gegenstromführung von Mutterlauge und Kristallisat vermindert. Durch eine partielle Rückführung von Kristallisat und Mutterlauge auf jeder Stufe kann zudem der Reinigungseffekt je Stufe erhöht werden. Dies geht natürlich zu Lasten des Durchsatzes.

Ein Nachteil der bisher bekannten Verfahren und Anlagen ist der hohe apparative und verfahrenstechnische Aufwand. Eine Vielzahl von verfahrenstechnischen Grundoperationen, die jede für sich apparativ getrennt betrieben werden, sind gemäß dem bekannten Stand der Technik im Mengenfluss miteinander verschaltet.

Gemäß US 5 127 921 sind beispielsweise je Kristallisationsstufe ein Kristallisator, ein Lösegefäß, eine externe Fest-Flüssigtrenneinrichtung und diverse Puffergefäße für Mutterlauge und Kristallisat notwendig. Außerdem sind Pumpen zum Lösungstransport und Vorrichtungen zur Rücklaufteilung und für den Fall einer Eindampfung der Lösung auch noch Destillatvorlagen erforderlich.

Diese mangelnde technologische Kompaktheit führt notwendigerweise zu einer komplexen Verschaltung der Anlagenteile und bei hoher Stufenzahl zu einem hohen apparativen Aufwand. Infolgedessen sind auch die Automatisierung zur Aufrechterhaltung eines stationären Gegenstromregimes und die Steuerung zur Synchronisierung aller Stufen sehr problematisch, zumal externe fest-flüssig Trennungen (Zentrifugen, Filter etc.) und Feststofftransporte zwischen Separatoren und Lösegefäßen erforderlich sind, die je nach Beschaffenheit des kristallinen Materials (Korngröße) sehr aufwändig sein können.

Auch die apparative Trennung zwischen Lösevorgang und Kristallisation ist nachteilig, da sich auf den Kühlflächen des Kristallisators schwer lösbare Krusten bilden können. Die Kristallisation erfolgt nach diesem Verfahren durch Abkühlung einer möglichst gesättigten Lösung. Daher wird die Ausbeute in erster Linie vom Temperaturgradienten der Löslichkeit bestimmt. Dies bedeutet aus wirtschaftlicher Sicht trotz Gegenstromprinzip eine deutliche Einengung des Ausbeutespielraumes. Viele Substanzen, vor allem pharmazeutische Wirkstoffe, haben keinen ausreichenden Löslichkeitsgradienten, um mit einem vertretbaren energetischen Aufwand wirtschaftliche Ausbeuten zu erzielen.

Eine zusätzliche Eindampfung wäre, obwohl nicht beschrieben, zwar denkbar, erfordert aber neben den ohnehin schon hohen anlagentechnischen, weitere apparative, technologische und auch logistische Aufwendungen.

Auch in US 4 787 985 wird ein Gegenstromkristallisationsprozess zur Reinigung von chemischen Substanzen mittels einer Vielzahl sich wiederholender, identischer technologischer Stufen beschrieben. Aber auch hier sind je Stufe mehrere technische Grundoperationen apparativ getrennt voneinander verschaltet: Kristallisator, Rekristallisator, Filtereinrichtung, Separator, Eindicker und/oder Waschkolonnen und Pumpen. Es wird ein vollkontinuierlicher Prozess beschrieben, welcher aber, wie in allen Beispielen beschrieben, nur für Kristallisationen aus der Schmelze und nicht aus Lösungsmitteln geeignet ist.

In US 5 505 924 wird ebenfalls ein mehrstufiger Gegenstromkristallisationsprozess mit entsprechender Anlage beschrieben. Innerhalb der u-förmigen Kristallisationseinheiten befinden sich Heiz- und Kühlzonen zur örtlich getrennten Auflösung und Rekristallisation. Der Transport des Kristallisates zur nächsten Kristallisationseinheit erfolgt als Feststoff über perforierte Container, welche in der Kühlzone das Kristallisat aufnehmen. Die Mutterlauge wird durch Abtropfen bzw. Waschen nach ihrem Entfernen aus der Kühlzone abgetrennt. Diese Kristallisatcontainer werden dann über eine automatisierbare Transporttechnologie in die Heizzone der nächsten Kristallisationseinheit zum Lösen eingebracht. Diese offene Transporttechnologie ist nur geeignet für wässrige Lösungen. Außerdem erfolgt die Überführung des Kristallisates nicht vollständig. Auch hier ist das beschriebene Verfahren nur anwendbar bei einer ausreichend großen Temperaturabhängigkeit der Löslichkeit. Die Ausbeute wird ausschließlich durch die Temperaturdifferenz zwischen Heiz- und Kühlzone bestimmt. Dies ist, wie oben bereits erwähnt, in vielen Fällen jedoch nicht ausreichend zur Erzielung wirtschaftlicher Ausbeuten.

Ein weiterer Nachteil der aufgeführten veröffentlichten Verfahren besteht darin, dass zur Aufrechterhaltung des Übersättigungszustandes der Lösung während der Kristallisation die notwendige Wärme über Kühlflächen transportiert wird. Dies kann bei längeren Prozesszeiten zu schwer lösbaren Ablagerungen führen, die für die Stabilität im stationären Betrieb sehr nachteilig sein können.

Für Kristallisate, die nicht in Suspension kristallisieren, sondern zur Ablagerung auf Apparateflächen neigen, sind die Verfahren und Anlagen nach dem aufgeführten Stand der Technik nicht geeignet.

Ferner können in Abhängigkeit von den Kristallisationseigenschaften Feinkornanteile eine externe Filtration und Waschung stark erschweren.

Weitere Verfahrenstechniken und Ausrüstungen zur mehrstufigen fraktionierten Kristallisation sind bisher vor allem auf dem Gebiet der Schmelzkristallisation (siehe bspw. EP 0891 798 A1 sowie G. Wellinghoff, K. Wintermantel: "Schmelzkristallisation theoretische Voraussetzungen und technische Grenzen", Chemie-Ingenieur-Technik Nr. 9., S. 881-891) entwickelt worden. Diese Verfahren beruhen vor allem auf der Ausbildung von Kristallschichten auf metallischen Oberflächen, wodurch eine technologisch einfache Trennung von Mutterlauge und Kristallisat möglich wird. Diese Verfahren sind aber in der Regel wegen der thermischen Sensitivität vieler Pharmawirkstoffe am Schmelzpunkt ungeeignet zu deren Reinigung.

DE 602 07 852 A1 offenbart ein Kristallisationsverfahren bei dem mehrere Kristallisatoren gleichzeitig kontinuierlich (nicht batchweise) im Gleichstrom (nicht im Gegenstrom) betrieben werden. In den Kristallisationsstufen werden dabei unterschiedliche Eindampfungsgrade einer Suspension erreicht und es erfolgt kein, wie in der mehrstufigen, fraktionierten Kristallisation üblich, vollständiges Lösen und Kristallisieren je Stufe. Es handelt sich unter dem Blickwinkel der Reinigungskristallisation um ein einstufiges Verfahren. Die Verdampfungswärme wird durch stufenweises Entspannen und damit Abkühlen der Suspension von einem Überdruck bis zum Normaldruckniveau bereitgestellt. Destillat kann zur Verdünnung und damit zur Steuerung der Abreinigung zurückgeführt werden.

Bei dem Verfahren gemäß DE 602 07 852 A1 erfolgt die Rückgewinnung von kristalliner Terephthalsäure, die weniger als 150 Teile pro Million auf Gewichtsmasse (ppmw) p-Toluylsäure bezogen auf das Gewicht der Terephthalsäure enthält, dass vier Schritte umfasst:

Im ersten Schritt wird eine Lösung aus Terephthalsäure und p-Toluylsäure mit einer Temperatur von 260 bis 320°C und einem bestimmten Druck beaufschlagt, der ausreichend ist, um das Lösungsmittel in der Flüssigphase zu erhalten.

Im zweiten Schritt wird die Lösung von Schritt (1) in eine Kristallisationszone eingespeist, welche eine Vielzahl in Reihe geschalteter Kristallisatoren umfasst, in welchen die Lösung einer geschwindigkeitsbestimmten Verdampfungskühlung durch sequenziellen Reduzierung des Drucks und der Temperatur unterzogen wird, um die Kristallisation von Terephthalsäure zu bewirken, wobei der Druck der Lösung am Ende der Kristallisationszone Umgebungsdruck oder weniger ist.

Im dritten Schritt erfolgt das Kondensieren von aus den Kristallisatoren verdampften Lösungsmitteln und die Rückführung des kondensierten Lösungsmittels in die Kristallisationszone an einem Punkt, der auf den Kristallisator folgt, aus welchem es erhalten wurde.

Im vierten und letzten Schritt des Verfahrens erfolgt die Gewinnung von fester, kristalliner Terephthalsäure durch Flüssig-Fest-Flüssig-Trennung bei Umgebungsdruck.

Die Aufgabe der vorliegenden Erfindung besteht somit darin, eine Anordnung und ein Verfahren zur Herstellung von hochreinen Kristallen, insbesondere von thermisch sensiblen pharmazeutischen Wirkstoffen, im Gegenstromkristallisationsprozess anzugeben, welche die zuvor stehend genannten Nachteile des Standes der Technik nicht aufweisen.

Die Ziele der vorliegenden Erfindung bestehen im Einzelnen darin:
- eine mehrstufige, auf dem Gegenstromprinzip beruhende Kristallisationstechnologie bereitzustellen, mit welcher bei nur geringem manuellen Bedienaufwand und mit hoher Zuverlässigkeit und Reproduzierbarkeit ein hochreines Kristallisat mit sehr guter Ausbeute hergestellt werden kann,
- eine anlagentechnisch kompakte Lösung vorzuschlagen, bei der die Operationen Lösen, Kristallisieren, Phasentrennen räumlich bzw. apparativ nicht getrennt voneinander, sondern innerhalb eines Kristallisators (Standardapparat, vorzugsweise beheizbarer Rührreaktor) ohne aufwendige Peripherie durchgeführt werden können,
- eine technologisch einfach durchzuführende Phasentrennung sowie Stofftransporte zur Realisierung des Gegenstroms zwischen den Kristallisationsstufen zu ermöglichen,
- anlagentechnisch eine Lösung anzugeben, welche parallel betriebene Stufen vorsieht, in denen bezüglich Reinigungseffekt und Ausbeute in allen Stufen ein hohes Maß an Übereinstimmung und Reproduzierbarkeit erzielt werden kann.
- eine Stufenausbeute, die in weiten Bereichen unabhängig von der Temperaturabhängigkeit der Löslichkeit einstellbar ist, zu ermöglichen,
- Kristallisationsphasen zu gewährleisten, in denen Kristallwachstum begünstigt und Keimbildung gehemmt werden und somit sowohl ein hoher Reinigungseffekt als auch eine gute Phasentrennung ermöglicht wird,
- eine weitgehend automatisierbare und an die Reinigungsaufgabe problemlos anpassungsfähige Technologie bereitzustellen,
- die Vermeidung von Störungen im Prozessablauf durch kristalline Ablagerungen auf Kristallisatorbauteilen während der Kristallisationsphase zu vermeiden,
und dabei die Realisierung einer stationären, quasikontinuierlichen Betriebsweise zu gewährleisten.

Diese Aufgabe wird durch eine Anordnung gemäß Anspruch 1 oder 2 und ein Verfahren gemäß Anspruch 9 oder 10. gelöst. Vorteilhafte Ausgestaltungen werden in den nachgeordneten Ansprüchen angegeben. Das Wesen des erfindungsgemäßen Verfahrens und der erfindungsgemäßen Anordnung besteht in der Herstellung von hochreinen Kristallen durch deren mehrstufige Kristallisation aus Lösungen. In den gemäß der Erfindung batchweise betriebenen Kristallisationsstufen werden Kristallisat und Mutterlauge ohne externe Abtrennung des Kristallisates im Gegenstrom geführt. Alle Transporte zwischen den Kristallisatoren erfolgen sequentiell und nur als Lösung. Die Löse- und Kristallisationsprozesse in den Kristallisatoren dagegen verlaufen parallel und bezüglich der Prozessbedingungen zeitlich synchron. Somit wird eine hohe Verfahrenseffizienz erreicht. Der Übersättigungsverlauf während der Kristallisation wird durch alternierende Heiz- und Verdampfungsphasen im Vakuum mit einem an die stofflichen Besonderheiten angepassten Vakuumprofil für alle Kristallisatoren gleich eingestellt. Die dabei erzeugten Temperaturschwingprofile begünstigen das Kristallwachstum und die Abreicherung der Verunreinigungen. Hieraus ergibt sich eine hohe Reproduzierbarkeit und Übereinstimmung sowohl der Ausbeuten als auch der Reinigungseffekte für alle Kristallisationsstufen. Mit einer kompakten, weitgehend automatisierten und an das Reinigungsproblem gut anpassbaren Anlage, kann in quasikontinuierlicher Betriebweise bei geringem Bedienaufwand ein hochreines Kristallisat mit sehr guter Ausbeute gewonnen werden.

Realisiert wird dies gemäß der vorliegenden Erfindung dadurch
- dass aus allen Kristallisatoren während der Kristallisationsphase im Parallelbetrieb unter gleichen Temperatur- und Druckverhältnissen bezogen auf die Einsatzmenge, anteilig die gleiche Menge Lösungsmittel kontinuierlich verdampft und damit die Übersättigung in allen Kristallisationsstufen synchronisiert wird,
- dass diese kontinuierliche Eindampfung unter Vakuum erfolgt und die hierzu erforderliche Verdampfungswärme dem Suspensionsvolumen entzogen wird, das sich dabei entsprechend abkühlt,
- dass die Verdampfungswärme dem Suspensionsvolumen vor der Kristallisationsphase zugeführt wird,
- dass Heizphase und Verdampfungsphase (Kristallisationsphase) für alle Kristallisatoren im Parallelbetrieb alternierend solange betrieben werden, bis die notwendige Stufenausbeute erreicht wird,
- dass alle Transporte zwischen den Kristallisatoren zur Realisierung des Gegenstromes von Mutterlauge und Kristallisat nach einem vorgebbaren Ablaufschema sequentiell durchgeführt und nur klare Lösungen gefördert werden,
- dass diese Transporte vorzugsweise durch bedienarme automatisierte Ablaufsteuerungen (Erzeugung von Druckdifferenzen durch Vakuum und / oder Inertgas, Schaltung von Ventilen bzw. Schaltung von Pumpen) ausgeführt werden,
- dass die Abtrennung der Mutterlauge vom Kristallisat innerhalb des Kristallisators erfolgt,
- dass die Prozessfunktion der Kristallisationsphase einer Stufe vorzugsweise mit dem Siedepunkt bei Normaldruck beginnt und mit dem Siedepunkt nahe Raumtemperatur unter entsprechendem Vakuum endet,
- dass für alle Kristallisatoren gleich und synchron die Prozessfunktion als zeitlich gesteuertes Vakuum in einem definierten Zeitfenster ausgeführt wird,
- dass durch die alternierende Abfolge von Heiz- und Kühlphasen (Temperaturschwingprofile) innerhalb einer Kristallisationsstufe eine Körnvergröberung und Verbesserung des Abreicherungseffektes erreicht wird, da sich nur der Feinkornanteil in den Heizphasen löst und in den Abkühlphasen auf die gröberen Kristalle aufkristallisiert wird und zwar unter der Voraussetzung, dass durch die gezielte Steuerung der Übersättigung mittels Vakuumprofil eine Keimneubildung vermieden und das Kristallwachstum für eine gute Abreicherung der Verunreinigungen ausreichend verlangsamt wird,
- dass dies durch eine an die Löslichkeitskurve und die Kristallisationseigenschaften der Substanz optimal anpassbare Prozessfunktion gegeben ist (in der Literatur als Prozessführung in der metastabilen Zone bezeichnet),
- dass alle Kristallisatoren in einen gemeinsamen Destillatsammler destillieren, von welchem das Destillat auf die Kristallisatoren für den folgenden Lösetakt rückverteilt wird, und
- dass die Befüllung der Kristallisatoren mit Frischlösungsmittel aus der Destillatvorlage füllstandsgesteuert erfolgt, wobei die Sollwerte der Füllstände in den einzelnen Reaktoren in Abhängigkeit von der gewünschten Ausbeute und der Löslichkeitsfunktion festgelegt werden.

Die Erfindung wird nachfolgend an Hand der in den Figuren gezeigten Ausführungsbeispiele erläutert, ohne auf diese beschränkt zu sein.

Es zeigen:
- Fig. 1: eine schematische Darstellung eines Ausführungsbeispiels für die erfindungsgemäße Anordnung zur Herstellung von hochreinen Kristallen und
- Fig. 2: eine schematische Darstellung eines weiteren Ausführungsbeispiels für die erfindungsgemäße Anordnung zur Herstellung von hochreinen Kristallen.

### 1. Ausführungsbeispiel

### (Betreiben der Anordnung mit mobiler Kristallisatphase)

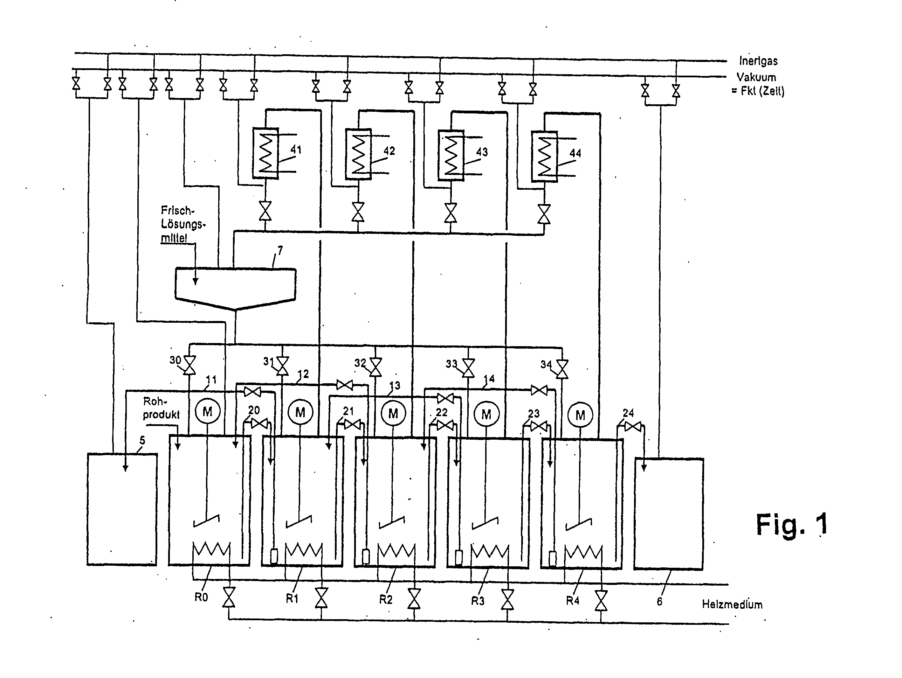

Wie aus Figur 1 ersichtlich, besteht die Anordnung zur Herstellung von hochreinen Kristallen aus einer Vielzahl von Kristallisatoren (R0 bis Rn, wobei n ganzzahlig und ≥ 2 ist), n Mutterlaugenleitungen (11 bis 1n) mit je einem Absperrventil, n+1 Kristallisatleitungen (20 bis 2n) mit je einem Absperrventil, n+1 Absperrventilen (30 bis 3n) zur Lösungsmitteldosierung, n Kondensatoren (41 bis 4n) sowie einem Vorratsgefäß (5) für Abfall, einem Vorratsgefäß (6) für reines Produkt und einem Vorratsgefäß (7) für Destillat- bzw. Frischlösungsmittel, wobei jeweils die Kristallisatoren Rn und Rn-2 über die Mutterlaugenleitung 1n und jeweils die Kristallisatoren Rn und Rn+1 über die Kristallisatleitung 2n miteinander verbunden sind.

Die Mutterlaugenleitung 11 führt vom Kristallisator R1 zum Vorratsgefäß (5) für Abfall, die Kristallisatleitung 2n führt vom Kristallisator Rn zum Vorratsgefäß (6) für reines Produkt.

Durch diese Anordnung ist ein Mutterlaugenfluss generierbar, der von einem Kristallisator zu dem übernächsten Kristallisator in Richtung abnehmender Reinheit gerichtet ist, sowie ein Kristallisatfluss generierbar, der von einem gelösten, vor der Kristallisation stehenden Kristallisat in den nächsten Kristallisator in Richtung höherer Reinheit gerichtet ist.

In dieser Anordnung sind Kristallisat und Mutterlauge in den einzelnen Kristallisationsstufen batchweise im Gegenstrom zueinander führbar, wobei eine von der gewünschten Reinheit des Kristallisates abhängige Anzahl von Kristallisatoren (R0 bis Rn) eingesetzt wird.

In allen Kristallisatoren der erfindungsgemäßen Anordnung sind die Mutterlaugenleitungen zur möglichst vollständigen Abtrennung der Mutterlauge vorzugsweise mit einem Filtrationselement ausgerüstet, wobei diese Leitungen mit Absperrventilen, die vorzugsweise elektrisch oder pneumatisch angesteuert werden, versehen sind.

Vorteilhaft sind alle Kristallisatoren (R0 bis Rn) einer gemeinsamen Vakuumquelle und einem gemeinsamen Vakuumregler sowie einer Inertgasquelle zugeordnet.

Vorzugsweise werden alle Kristallisatoren aus einer gemeinsamen Heizquelle parallel versorgt und jeder einzelne Kristallisator ist mit einem Regelsystem ausgerüstet, über welches die Innentemperatur während der Heizphase gesteuert wird.

Den Kristallisatoren (R1 bis Rn) ist je ein Kondensator sowie eine gemeinsame Destillatvorlage zugeordnet, aus welcher Frischlösungsmittel auf die einzelnen Kristallisatoren verteilt wird. Vorteilhaft sind alle Kristallisatoren (R0 bis Rn) mit Füllstandsregelung und Absperrventilen (30 bis 3n) in der Zuleitung des Frischlösungsmittels versehen.

Die erfindungsgemäße Anlage wird betrieben, in dem Kristallisat und Mutterlauge in den einzelnen Kristallisationsstufen batchweise im Gegenstrom zueinander geführt werden, wobei nach der Kristallisation, beginnend mit der Kristallisationsstufe der niedrigsten Reinheit, die Mutterlauge innerhalb des Kristallisators vom Kristallisat abgetrennt, diese Mutterlauge in die übernächste Kristallisationsstufe in Richtung absteigender Reinheit transportiert wird, wohingegen das Kristallisat in der Kristallisationsstufe verbleibt und dort mit der Mutterlauge aus der übernächsten Kristallisationsstufe höherer Reinheit und/oder mit Frischlösungsmittel versetzt, gelöst, anschließend beginnend mit der Kristallisationsstufe der höchsten Reinheit in die nächste Kristallisationsstufe in Richtung der höheren Reinheit transportiert und dort zeitgleich mit allen anderen Kristallisationsstufen einer Kristallisation unterzogen wird.

Vorteilhaft wird in den einzelnen Kristallisationsstufen während der Kristallisation im Parallelbetrieb unter gleichen Temperatur- und Druckverhältnissen bezogen auf die Einsatzmenge, anteilig die gleiche Menge Lösungsmittel kontinuierlich verdampft, wobei die Übersättigungen und Ausbeuten in allen Kristallisationsstufen synchronisiert werden.

Vorzugsweise erfolgt dabei eine kontinuierliche Eindampfung unter Vakuum, wobei die hierzu erforderliche Verdampfungswärme dem Suspensionsvolumen entzogen wird, das sich dabei entsprechend abkühlt.

Gemäß der vorliegenden Erfindung wird dieses Vakuum für alle Kristallisatoren gleich und synchron als zeitlich gesteuerte Vakuumfunktion in einem definierten Zeitfenster ausgeführt, wobei diese Vakuumfunktion zeitlich so gesteuert wird, dass nach der Primärkeimbildung die weitere Kristallisation durch Kristallwachstum erfolgt und eine erneute Keimbildung verhindert wird.

Die Vakuumfunktion der Kristallisationsphase einer Stufe beginnt vorzugsweise mit dem Siedepunkt bei Normaldruck und endet vorzugsweise mit dem Siedepunkt nahe Raumtemperatur unter entsprechendem Vakuum.

Bei dem erfindungsgemäßen Verfahren wird die Verdampfungswärme dem Suspensionsvolumen in einer Heizphase vor der Verdampfungsphase (Kristallisationsphase) zugeführt, wobei Heizphase und Verdampfungsphase (Kristallisationsphase) alternierend solange betrieben werden, bis die notwendige Stufenausbeute erreicht ist. Gemäß der Erfindung werden soviel Kristallisationsstufen vermittels der Kristallisatoren (R1 bis Rn) parallel betrieben, bis die erforderliche Reinheit im Kristallisat erreicht wird.

Bei der in Fig. 1 dargestellten Ausführungsform der erfindungsgemäßen Anordnung ist jedem Kristallisator eine bestimmte Reinheitsstufe zugeordnet, bspw. dem Kristallisator R1 die Reinheitsstufe 1. Die Kristallisatoren sind bezüglich des Mutterlaugentransportes durch die Mutterlaugenleitungen von Kristallisator Rn nach Kristallisator Rn-2 verschaltet. Das Kristallisat wird über die Kristallisatleitung nach jeder Kristallisation von der Stufe niedriger Reinheit in Richtung höherer Reinheit transportiert.

### 2. Ausführungsbeispiel

### (Betreiben der Anordnung mit stationärer Kristallisatphase)

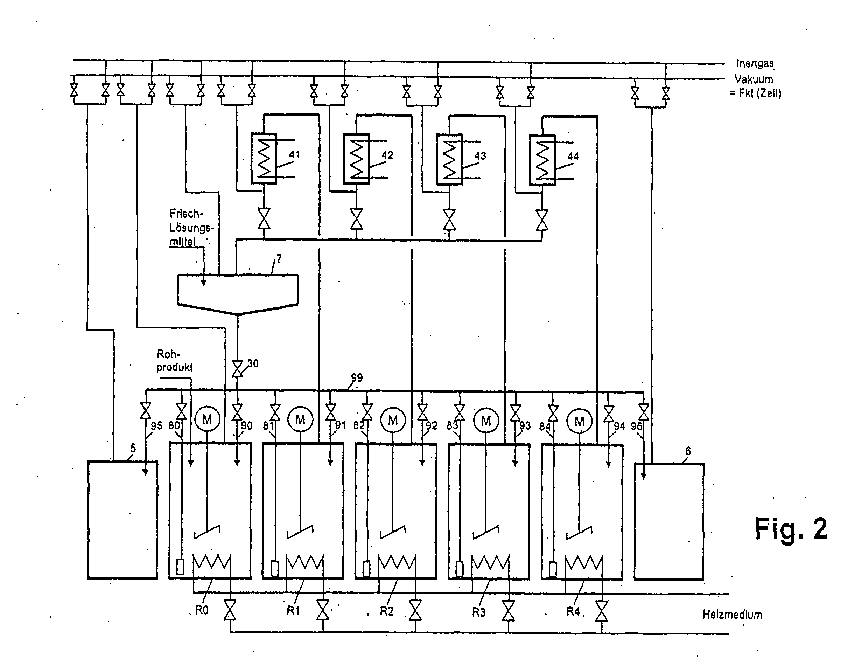

Bei einer weiteren möglichen Ausführungsform des Betreibens der erfindungsgemäßen Anordnung gemäß Fig. 2 verbleibt das Kristallisat, während es den mehrstufigen Reinigungsprozess, bspw. Reinheitsstufe 1 ... 4, durchläuft, stationär in einem bestimmten Kristallisator.
Der Mutterlaugentransport erfolgt bezüglich der Reinheitsstufen nach dem gleichen Schema wie bei dem voran stehenden Ausführungsbeispiel (Gegenstromführung von Reinheitsstufe n nach Reinheitsstufe n-2). Da aber die Kristallisatoren nach jedem Kristallisationsschritt andere Reinheitsstufen enthalten, muss die Verschaltung für den Mutterlaugentransport entsprechend flexibel sein. R0 dient wie in Fig. 1 als Lösegefäß für das Rohprodukt und der Mutterlauge von Reinheitsstufe 2. Die Einspeisung der Lösung aus R0 erfolgt in den jeweiligen Kristallisator mit der Reinheitsstufe 1. Dieser wechselt nach jedem Kristallisationsschritt. Wenn in einem Kristallisator die höchste Reinheitsstufe erreicht ist, beginnt nach Austrag des Kristallisates mit Einspeisung von Rohprodukt und Mutterlauge der Stufe 2 als Lösung der Reinigungszyklus in diesem Kristallisator erneut. Die Kristallisationsschritte erfolgen nach demselben erfindungsgemäßen Verfahren in allen Kristallisatoren bezüglich der Prozessbedingungen zeitlich synchron und auf dieselbe Weise.

### 3. Ausführungsbeispiel

### (Betreiben der Anordnung zur Trennung von Stoffgemischen)

Eine weitere Ausführungsform des Betreibens besteht in der Kombination von je zwei Anordnungen nach Fig. 1 oder Fig. 2 zu einer Aufreinigungs- und einer Rückgewinnungssektion. Dabei besteht die Möglichkeit nichteutektische Gemische vollständig zu trennen bzw. die Trennung bis zum theoretisch möglichen Grad durchzuführen. Das Rohprodukt wird dann auf der Reinheitsstufe eingespeist, die seinem Verunreinigungsgrad entspricht. Alle Kristallisationsstufen mit höherem Reinheitsgrad sind dann der Aufreinigungssektion und alle Stufen mit niedrigerem Reinheitsgrad sind der Rückgewinnungssektion zugeordnet. Unter Umständen ist es dabei sinnvoll, durch Rückführung von gereinigtem Kristallisat bzw. von Mutterlauge an den jeweiligen Enden der Reinigungskette den Auf- bzw. Abreinigungseffekt zu verstärken.

Der Vorteil der erfindungsgemäßen mehrstufigen Kristallisationstechnologie besteht darin, dass der kinetische Faktor des Stoffüberganges sicher beherrschbar ist, das heißt, die Übersättigung und das Kornwachstum werden so beeinflusst, dass nicht nur ein grobes, gut abtrennbares Kristallisat entsteht, sondern auch eine maximale Abreicherung der Verunreinigungen reproduzierbar erreicht wird. Durch das erfindungsgemäße Verfahren und vermittels der erfindungsgemäßen Anordnung sind die kritischen Parameter, welche die Übersättigung und das Kornwachstum beeinflussen, in der Vielzahl von Kristallisationsstufen in gleicher Weise und zeitlich synchron steuerbar, so dass die Reproduzierbarkeit des Reinigungseffektes, der für die Qualitätssicherung und die Validierung der Herstellverfahren pharmazeutischer Wirkstoffe außerordentlich bedeutsam ist, gegeben ist.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- R0 bis R4 -: Kristallisatoren (Rührreaktoren)
- 11 bis 14 -: Mutterlaugenleitungen mit Absperrventil und Filtrationselement
- 20 bis 24 -: Kristallisatleitungen mit Absperrventil
- 30 bis 34 -: Absperrventile für die Lösungsmitteldosierung
- 41 bis 44 -: Kondensatoren
- 5 -: Vorratsgefäß für Abfall
- 6 -: Vorratsgefäß für reines Produkt
- 7 -: Vorratsgefäß für Lösungsmittel
- 80 bis 84 -: Absaugleitungen mit Absperrventil und Filtrationselement
- 90 bis 96 -: Zugabeleitungen mit Absperrventil
- 99 -: zentrale Transportleitung
- n -: ganze Zahl (≥ 0)

## Patentansprüche

1. Anordnung zur Herstellung von hochreinen Kristallen umfassend eine Vielzahl von Kristallisatoren, Mutterlaugenleitungen und Kristallisatleitungen , **dadurch gekennzeichnet, dass** die Vielzahl von n+1 Kristallisatoren (R0 bis Rn), n Mutterlaugenleitungen (11 bis 1n) mit je einem Absperrventil und n +1 Kristallisatleitungen (20 bis 2n) mit je einem Absperrventil, aufweist, die Kristallisatoren (R0 bis Rn) über die Mutterlaugenleitungen (11 bis 1n) und die Kristallisatleitungen (20 bis 2n) so verbunden sind, dass im Betriebszustand ein Mutterlaugenfluss generierbar ist, der von einem Kristallisator zu dem übernächsten Kristallisator in Richtung abnehmender Reinheit gerichtet ist, und ein Kristallisatfluss generierbar ist, der von einem gelösten, vor der Kristallisation stehenden Kristallisat in den nächsten Kristallisator in Richtung höherer Reinheit gerichtet ist, und die Anordnung n + 1 Absperrventile (30 bis 3n) zur Lösungsmitteldosierung, n Kondensatoren (41 bis 4n) sowie ein Vorratsgefäß (5) für Abfall, ein Vorratsgefäß (6) für reines Produkt und ein Vorratsgefäß (7) für Destillat- und / oder Frischlösungsmittel besitzt, die über Leitungen mit den Kristallisatoren (R0 bis Rn) verbunden sind, wobei n in jedem Fall ganzzahlig sowie ≥ 2 ist.

2. Anordnung zur Herstellung von hochreinen Kristallen umfassend eine Vielzahl von Kristallisatoren, Mutterlaugenleitungen und Kristallisatleitungen , **dadurch gekennzeichnet, dass** die Vielzahl von n+1 Kristallisatoren (R0 bis Rn), mit je einer Absaugleitung (80 bis 8n) mit Absperrventil sowie je einer Zugabeleitung (90 bis 9n) mit Absperrventil, n Kondensatoren (41 bis 4n), einem Vorratsgefäß (5) für Abfall, einem Vorratsgefäß (6) für reines Produkt und einem Vorratsgefäß (7) für Destillat- oder Frischlösungsmittel mit nachgeordnetem Absperrventil (30) zur Lösungsmitteldosierung, verbunden ist, wobei alle Kristallisatoren (R0 bis Rn) und alle Vorratsgefäße (5 - 7) mit ihren Absaugleitungen (80 bis 8n) oder Zugabeleitungen (90 bis 9[n+2]) über eine zentrale Transportleitung (99) verbunden sind, so dass im Betriebszustand ein Mutterlaugenfluss generierbar ist, der von einem Kristallisator mit der Reinheitstufe n zu dem übernächsten Kristallisator mit der Reinheitsstufe n-2 in Richtung abnehmender Reinheit gerichtet ist, wobei n in jedem Fall ganzzahlig und ≥ 2 ist.

3. Anordnung zur Herstellung von hochreinen Kristallen im Gegenstromprinzip nach Anspruch 1 oder 2, **dadurch gekennzeichnet, dass** die Mutterlaugenleitungen / Absaugleitungen zur möglichst vollständigen Abtrennung der Mutterlauge mit einem Filtrationselement versehen sind.

4. Anordnung zur Herstellung von hochreinen Kristallen im Gegenstromprinzip nach Anspruch 1 oder 2, **dadurch gekennzeichnet, dass** alle Kristallisatoren (R0 bis Rn) und Vorratsgefäße (5; 6; 7) einer gemeinsamen Vakuumquelle und einem gemeinsamen Vakuumregler sowie einer Inertgasquelle zugeordnet sind.

5. Anordnung zur Herstellung von hochreinen Kristallen im Gegenstromprinzip nach Anspruch 1 oder 2, **dadurch gekennzeichnet, dass** alle Kristallisatoren aus einer gemeinsamen Heizquelle parallel versorgt und jeder einzelne Kristallisator mit einem Regelsystem ausgerüstet ist, vermittels dessen die Innentemperatur während der Heizphase steuerbar ist.

6. Anordnung zur Herstellung von hochreinen Kristallen im Gegenstromprinzip nach Anspruch 1 oder 2, **dadurch gekennzeichnet, dass** den Kristallisatoren (R1 bis Rn) je ein Kondensator sowie eine gemeinsame Destillatvorlage zugeordnet ist, aus welcher Frischlösungsmittel auf die einzelnen Kristallisatoren verteilbar ist.

7. Anordnung zur Herstellung von hochreinen Kristallen im Gegenstromprinzip nach Anspruch 1 oder 2, **dadurch gekennzeichnet, dass** alle Kristallisatoren (R0 bis Rn) mit Füllstandsregelung und Schaltventil (30 bis 3n) in der Zuleitung des Frischlösungsmittels versehen sind.

8. Anordnung zur Herstellung von hochreinen Kristallen im Gegenstromprinzip nach Anspruch 2, **dadurch gekennzeichnet, dass** die Zugabeleitungen (90 bis 9n) der Kristallisatoren mit ihren Absperrventilen verschlossen sind, wobei die Lösungen und Lösungsmittel über die Absaugleitungen (80 bis 8n) zugebbar sind.

9. Verfahren zur Herstellung von hochreinen Kristallen im Gegenstromprinzip unter Verwendung einer Anordnung gemäß einem oder mehrerer der Ansprüche 1 und 3 bis 7 bei dem Kristallisat und Mutterlauge in den einzelnen Kristallisationsstufen (R0 bis Rn) batchweise im Gegenstrom zueinander geführt werden, wobei nach der Kristallisation, beginnend mit der Kristallisationsstufe der niedrigsten Reinheit, die Mutterlauge innerhalb des Kristallisators vom Kristallisat abgetrennt, diese Mutterlauge in die übernächste Kristallisationsstufe in Richtung absteigender Reinheit transportiert wird, wohingegen das Kristallisat in der Kristallisationsstufe verbleibt und dort, mit der Mutterlauge aus der übernächsten Kristallisationsstufe höherer Reinheit und/oder mit Frischlösungsmittel versetzt, gelöst, anschließend beginnend in der Kristallisationsstufe der höchsten Reinheit in die nächste Kristallisationsstufe in Richtung höherer Reinheit transportiert und dort zeitgleich mit allen anderen Kristallisationsstufen einer Kristallisation unterzogen wird.

10. Verfahren zur Herstellung von hochreinen Kristallen im Gegenstromprinzip unter Verwendung einer Anordnung gemäß einem oder mehrerer der Ansprüche 2 bis 8 bei dem Kristallisat und Mutterlauge in den einzelnen Kristallisationsstufen batchweise im Gegenstrom zueinander geführt werden, wobei nach der Kristallisation, beginnend mit der Kristallisationsstufe der niedrigsten Reinheit, die Mutterlauge innerhalb eines Kristallisators vom Kristallisat abgetrennt, diese Mutterlauge in die übernächste Kristallisationsstufe in Richtung absteigender Reinheit transportiert wird, wohingegen das Kristallisat in der Kristallisationstufe verbleibt und dort mit der Mutterlauge aus der übernächsten Kristallisationsstufe höherer Reinheit und/oder mit Frischlösungsmittel versetzt, gelöst und zeitgleich mit allen anderen Kristallisationsstufen einer Kristallisation unterzogen wird.

11. Verfahren zur Herstellung von hochreinen Kristallen im Gegenstromprinzip gemäß Anspruch 9 oder 10, **dadurch gekennzeichnet, dass** in den einzelnen Kristallisationsstufen während der Kristallisation im Parallelbetrieb unter gleichen Temperatur- und Druckverhältnissen, bezogen auf die Einsatzmenge anteilig die gleiche Menge Lösungsmittel kontinuierlich verdampft wird.

12. Verfahren zur Herstellung von hochreinen Kristallen im Gegenstromprinzip gemäß Anspruch 9 oder 10, **dadurch gekennzeichnet, dass** die Übersättigungen und Ausbeuten in allen Kristallisationsstufen synchronisiert werden.

13. Verfahren zur Herstellung von hochreinen Kristallen im Gegenstromprinzip gemäß Anspruch 9 oder 10, **dadurch gekennzeichnet, dass** eine kontinuierliche Eindampfung unter Vakuum erfolgt und die hierzu erforderliche Verdampfungswärme dem Suspensionsvolumen entzogen wird, das sich dabei entsprechend abkühlt.

14. Verfahren zur Herstellung von hochreinen Kristallen im Gegenstromprinzip gemäß Anspruch 9 oder 10, **dadurch gekennzeichnet, dass** das Vakuum für alle Kristallisatoren gleich und synchron als zeitlich gesteuerte Vakuumfunktion in einem definierten Zeitfenster ausgeführt wird.

15. Verfahren zur Herstellung von hochreinen Kristallen im Gegenstromprinzip gemäß Anspruch 9 oder 10, **dadurch gekennzeichnet, dass** die Vakuumfunktion zeitlich so gesteuert wird, dass nach der Primärkeimbildung die weitere Kristallisation durch Kristallwachstum erfolgt und eine erneute Keimbildung verhindert wird.

16. Verfahren zur Herstellung von hochreinen Kristallen im Gegenstromprinzip gemäß Anspruch 9 oder 10, **dadurch gekennzeichnet, dass** die Vakuumfunktion der Kristallisationsphase einer Stufe mit dem Siedepunkt bei Normaldruck beginnt und mit dem Siedepunkt nahe Raumtemperatur unter entsprechendem Vakuum endet.

17. Verfahren zur Herstellung von hochreinen Kristallen im Gegenstromprinzip gemäß Anspruch 9 oder 10, **dadurch gekennzeichnet, dass** die Verdampfungswärme dem Suspensionsvolumen in einer Heizphase vor der Verdampfungsphase (Kristallisationsphase) zugeführt wird.

18. Verfahren zur Herstellung von hochreinen Kristallen im Gegenstromprinzip gemäß Anspruch 9 oder 10, **dadurch gekennzeichnet, dass** die Heizphase und die Verdampfungsphase (Kristallisationsphase) alternierend solange betrieben werden, bis die notwendige Stufenausbeute erreicht wird.

19. Verfahren zur Herstellung von hochreinen Kristallen im Gegenstromprinzip gemäß Anspruch 9 oder 10, **dadurch gekennzeichnet, dass** R1 bis Rn Kristallisationsstufen parallel betrieben werden, bis die erforderliche Reinheit im Kristallisat erreicht wird.

20. Verfahren zur Trennung von Stoffgemischen unter Verwendung der Kombination von zwei Anordnungen gemäß einem oder mehrerer der Ansprüche 1 bis 8, die im Verfahren gemäß einem oder mehrerer der Ansprüche 9 bis 19 betrieben werden, wobei die eine Anordnung als Aufreinigungssektion und die andere Anordnung als Rückgewinnungssektion betrieben und das Rohprodukt auf der Reinheitstufe eingespeist wird, die seinem Verunreinigungsgrad entspricht.

## Claims

1. Arrangement for producing high-purity crystals comprising a plurality of crystallizers, mother liquor lines and crystallization lines, wherein the plurality of n+1 crystallizers (R₀ to Rn) are provided with n mother liquor lines (11 to 1n) each of which is equipped with a shut-off valve and n+1 crystallization lines (20 to 2n) each of which has a shut-off valve, the crystallizers (R0 to Rn) are connected via the mother liquor lines (11 to 1n) and the crystallization lines (20 to 2n) so that in operation a mother liquor flow can be generated that is directed from a crystallizer to the second-next crystallizer in the direction of decreasing purity, and a crystallization product flow can be generated that is directed from a dissolved crystallization product that is about to crystallize to the next crystallizer in the direction of higher purity,
and the arrangement comprises n+1 shut-off valves (30 to 3n) for solvent dosage, n condensers (41 to 4n) as well as a storage vessel (5) for waste, a storage vessel (6) for pure product and a storage vessel (7) for distillate and/or fresh solvent and said vessels are connected with the crystallizers (R0 to Rn) via lines, and in any case n is an integer and ≥ 2.

2. Arrangement for producing high-purity crystals comprising a plurality of crystallizers, mother liquor lines and crystallization lines, wherein each of the large number of n+1 crystallizers (R₀ to Rn) is connected with a suction line (80 to 8n) with shut-off valve and a feed line (90 to 9n) with shut-off valve, n condensers (41 to 4n), a storage vessel (5) for waste, a storage vessel (6) for pure product and a storage vessel (7) for distillate or fresh solvent with downstream shut-off valve (30) for solvent dosage, and all crystallizers (R0 to Rn) and all storage vessels (5 - 7) with their suction lines (80 to 8n) or feed lines [90 to 9(n+2)] are connected via a central transport line (99) so that in operation a mother liquor flow can be generated that is directed from a crystallizer with the purity level n to the second-next crystallizer n-2 in the direction of decreasing purity, and in any case n is an integer and ≥ 2.

3. Arrangement for producing high-purity crystals in countercurrent principle in accordance with claim 1 or 2, wherein the mother liquor lines / suction lines are provided with a filtration element for the separation, as complete as possible, of the mother liquor.

4. Arrangement for producing high-purity crystals in countercurrent principle in accordance with claim 1 or 2, wherein all crystallizers (R0 to Rn) and storage vessels (5; 6; 7) are associated to a common vacuum source and a common vacuum controller as well as to an inert gas source.

5. Arrangement for producing high-purity crystals in countercurrent principle in accordance with claim 1 or 2, wherein all crystallizers are supplied in parallel by a common heating source and each of the crystallizers is equipped with a control system that controls the inside temperature during the heating phase.

6. Arrangement for producing high-purity crystals in countercurrent principle in accordance with claim 1 or 2, wherein each of the crystallizers (R1 to Rn) is provided with a condenser with a common distillate recipient from which fresh solvent can be distributed to the individual crystallizers.

7. Arrangement for producing high-purity crystals in countercurrent principle in accordance with claim 1 or 2, wherein all crystallizers (R0 to Rn) are equipped with a filling level control and a switching valve (30 to 3n) in the supply line of fresh solvent.

8. Arrangement for producing high-purity crystals in countercurrent principle in accordance with claim 2, wherein the supply lines (90 to 9n) of the crystallizers are closed by their shut-off valves and the suspensions and solvents can be charged via the suction lines (80 to 8n).

9. Method for producing high-purity crystals in countercurrent principle in accordance with one claim or several of the claims 1 and 3 to 7, in which the crystallization product and mother liquor are led to each other batch by batch in countercurrent in the individual crystallization stages (R0 to Rn), whereby after the crystallization, starting with the crystallization stage of the lowest purity, the mother liquor is separated from the crystallization product within the crystallizer, said mother liquor is transported to the second-next crystallization stage in the direction of decreasing purity whereas the crystallization product remains in the crystallization stage and the mother liquor of the second-next crystallization stage of higher purity and/or fresh solvent are added there, dissolved and then, starting with the crystallization stage of the highest purity, transported to the next crystallization stage in the direction of higher purity, and there it is subject to crystallization simultaneously with all the other crystallization stages.

10. Method for producing high-purity crystals in countercurrent principle in accordance with one claim or several of the claims 2 to 8 in which the crystallization product and mother liquor are led to each other batch by batch in countercurrent in the individual crystallization stages, whereby after the crystallization, starting with the crystallization stage of the lowest purity, the mother liquor is separated from the crystallization product within a crystallizer, said mother liquor is transported to the second-next crystallization stage in the direction of decreasing purity whereas the crystallization product remains in the crystallization stage and the mother liquor of the second-next crystallization stage of higher purity and/or fresh solvent are/is added to it, and the crystallization product is dissolved there and simultaneously subject to a crystallization with all the other crystallization stages.

11. Method for producing high-purity crystals in countercurrent principle in accordance with claim 9 or 10, wherein during the crystallization, in parallel operation the same amount of solvent, related to the quantity used, is continuously evaporated under the same temperature and pressure conditions in the individual crystallization stages.

12. Method for producing high-purity crystals in countercurrent principle in accordance with claim 9 or 10, wherein the supersaturations and yields are synchronized in all crystallization stages.

13. Method for producing high-purity crystals in countercurrent principle in accordance with claim 9 or 10, wherein a continuous evaporation is performed under vacuum and the evaporation heat required for this process is withdrawn from the suspension volume that cools down correspondingly.

14. Method for producing high-purity crystals in countercurrent principle in accordance with claim 9 or 10, wherein the vacuum for all crystallizers is realized in a similar and synchronous manner as a time-controlled vacuum function in a defined time slot.

15. Method for producing high-purity crystals in countercurrent principle in accordance with claim 9 or 10, wherein the vacuum function is time-controlled in such a way that after the primary germ formation the further crystallization is caused by crystal growth and a new germ formation is inhibited.

16. Method for producing high-purity crystals in countercurrent principle in accordance with claim 9 or 10, wherein the vacuum function of the crystallization phase of a stage starts at the boiling point under normal pressure and ends at the boiling point at almost room temperature under appropriate vacuum.

17. Method for producing high-purity crystals in countercurrent principle in accordance with claim 9 or 10, wherein the evaporation heat is led to the suspension volume in a heating phase before the evaporation phase (crystallization phase).

18. Method for producing high-purity crystals in countercurrent principle in accordance with claim 9 or 10, wherein the heating phase and the evaporation phase (crystallization phase) are operated alternatively until the required stage yield is obtained.

19. Method for producing high-purity crystals in countercurrent principle in accordance with claim 9 or 10, wherein Rl to Rn crystallization stages are operated in parallel until the required purity is attained in the crystallization product.

20. Method for separating material mixtures by using the combination of two arrangements according one claim or several of the claims 1 to 8 that are operated according to one claim or several of the claims 9 to 19, whereby the one arrangement is operated as a purification section and the other arrangement is used as a recovery section and the raw product is supplied on the purity stage that corresponds to its impurity level.

## Revendications

1. Dispositif pour la production des cristaux de haute pureté contenant un grand nombre de cristallisateurs, conduites d'eaux mères et conduites de cristallisats, est **caractérisé en ce que** le grand nombre de n+1 cristallisateurs (R0 à Rn) possède n conduites d'eaux mères (11 à 1n) respectivement avec une vanne d'arrêt et n+1 conduites de cristallisats (20 à 2n) respectivement avec une vanne d'arrêt, que les cristallisateurs (R0 à Rn) sont liés par les conduites d'eaux mères (11 à 1n) et les conduites de cristallisats (20 à 2n) de sorte qu'un flux d'eaux mères puisse être généré en état de fonctionnement, qui soit dirigé d'un cristallisateur au cristallisateur après le suivant en direction de pureté diminuante, et qu'un flux de produits de cristallisations puisse être généré, qui soit dirigé à partir d'un cristallisat dissous, se trouvant immédiatement avant la cristallisation dans le prochain cristallisateur en direction de pureté plus élevée, et que le dispositif est muni de n + 1 vannes d'arrêt (30 à 3n) pour le dosage des solvants, n condensateurs (41 bis 4n) ainsi que d'un réservoir (5) pour les déchets, un réservoir (6) pour le produit pur et un réservoir (7) pour le destillat et / ou solvant pur, qui sont reliés avec les cristallisateurs (R0 à Rn) par les conduites, n étant en tout cas un nombre entier ainsi que ≥ 2.

2. Dispositif pour la production des cristaux de haute pureté contenant un grand nombre de cristallisateurs, conduites d'eaux mères et conduites de cristallisats, est **caractérisé en ce que** le grand nombre de n+1 cristallisateurs (R0 à Rn) est respectivement lié avec une conduite d'aspiration (80 à 8n) avec vanne d'arrêt ainsi qu'avec une conduite d'apport (90 à 9n) avec vanne d'arrêt, n condensateurs (41 à 4n), un réservoir (5) pour les déchets, un réservoir (6) pour le produit pur et un réservoir (7) pour le destillat ou solvant pur avec vanne d'arrêt (30) subordonnée pour le dosage des solvants, et les conduites d'aspiration (80 à 8n) ou les conduites d'apport (90 à 9[n+2]) de tous les cristallisateurs (R0 à Rn) et de tous les réservoirs (5 - 7) étant liés par une conduite de transport centrale (99) de sorte qu'un flux d'eaux mères puisse être généré en état de fonctionnement, qui soit dirigé d'un cristallisateur avec le degré de pureté n au cristallisateur après le suivant avec le degré de pureté n-2 en direction de pureté diminuante, n étant en tout cas un nombre entier ainsi que ≥ 2.

3. Dispositif pour la production des cristaux de haute pureté selon le principe de contre-courant suivant la revendication 1 ou 2 est **caractérisé en ce que** les conduites d'eaux mères / conduites d'aspiration sont équipées d'un élément de filtration pour la séparation complète d'eaux mères dans la mesure du possible.

4. Dispositif pour la production des cristaux de haute pureté selon le principe de contre-courant suivant la revendication 1 ou 2 est **caractérisé en ce que** tous les cristallisateurs (R0 à Rn) et réservoirs (5; 6; 7) sont attribués à une source commune de vide et un régulateur commun de vide ainsi qu'à une source commune de gaz inerte.

5. Dispositif pour la production des cristaux de haute pureté selon le principe de contre-courant suivant la revendication 1 ou 2 est **caractérisé en ce que** tous les cristallisateurs sont alimentés en parallèle par une source commune de chauffage et que chaque cristallisateur est muni d'un système de réglage au moyen duquel la température intérieure durant la phase de chauffage peut être réglée.

6. Dispositif pour la production des cristaux de haute pureté selon le principe de contre-courant suivant la revendication 1 ou 2 est **caractérisé en ce qu'**un condensateur est respectivement attribué aux cristallisateurs (R1 bis Rn) ainsi qu'un ballon commune de distillation duquel le solvant pur peut être reparti aux cristallisateurs individuels.

7. Dispositif pour la production des cristaux de haute pureté selon le principe de contre-courant suivant la revendication 1 ou 2 est **caractérisé en ce que** tous les cristallisateurs (R0 à Rn) sont munis d'un réglage du niveau et d'une soupape de commande (30 à 3n) se trouvant dans la conduite d'amenée du solvant pur.

8. Dispositif pour la production des cristaux de haute pureté selon le principe de contre-courant suivant la revendication 2 est **caractérisé en ce que** les conduites d'apport (90 à 9n) des cristallisateurs sont fermées par leurs vannes d'arrêt et les solutions et les solvants peuvent être ajoutés par les conduites d'aspiration (80 à 8n).

9. Procédé pour la production des cristaux de haute pureté selon le principe de contre-courant en utilisant un dispositif suivant une ou plusieurs des revendications 1 et 3 à 7, pour lequel les cristallisats et les eaux mères dans les étapes de cristallisation (R0 à Rn) sont alimentés l'un à l'autre par lots selon le principe de contre-courant, et après la cristallisation - en commençant par l'étape de cristallisation de la pureté la plus basse - les eaux mères dans les cristallisateurs étant séparés des cristallisats et ces eaux mères étant transportés dans l'étape de cristallisation après la suivante en direction de pureté diminuante, tandis que les cristallisats restent dans l'étape de cristallisation et sont mélangés et dissous ici avec les eaux mères de l'étape de cristallisation après la suivante d'une pureté plus élevée et/ou avec du solvant pur et sont transportés après - en commençant par l'étape de cristallisation de la pureté la plus haute - dans la prochaine étape de cristallisation en direction de pureté plus élevée et ici sont soumis à une cristallisation simultanément avec toutes les autres étapes de cristallisation.

10. Procédé pour la production des cristaux de haute pureté selon le principe de contre-courant en utilisant un dispositif suivant une ou plusieurs des revendications 2 à 8, pour lequel les cristallisats et les eaux mères dans les étapes de cristallisation sont alimentés l'un à l'autre par lots selon le principe de contre-courant, et après la cristallisation - en commençant par l'étape de cristallisation de la pureté la plus basse - les eaux mères dans les cristallisateurs étant séparés des cristallisats et ces eaux mères étant transportés dans l'étape de cristallisation après la suivante en direction de pureté diminuante, tandis que les cristallisats restent dans l'étape de cristallisation et sont mélangés et dissous ici avec les eaux mères de l'étape de cristallisation après la suivante d'une pureté plus élevée et/ou avec du solvant pur et ici sont soumis à une cristallisation simultanément avec toutes les autres étapes de cristallisation.

11. Procédé pour la production des cristaux de haute pureté selon le principe de contre-courant suivant la revendication 9 ou 10 est **caractérisé en ce que** dans les étapes individuelles de cristallisation durant la cristallisation en fonctionnement en parallèle dans les mêmes conditions de températures et pression, la même quantité de solvant proportionnellement évapore en continue par rapport à la quantité usée.

12. Procédé pour la production des cristaux de haute pureté selon le principe de contre-courant suivant la revendication 9 ou 10 est **caractérisé en ce que** les sursaturations et rendements dans toutes les étapes de cristallisation sont synchronisés.

13. Procédé pour la production des cristaux de haute pureté selon le principe de contre-courant suivant la revendication 9 ou 10 est **caractérisé en ce qu'**une réduction continue par ébullition s'effectue sous vide et que la chaleur d'évaporation requise pour ce processus est extraite du volume de suspension, qui se réduit en conséquence.

14. Procédé pour la production des cristaux de haute pureté selon le principe de contre courant suivant la revendication 9 ou 10 est **caractérisé en ce que** le vide pour tous les cristallisateurs est fourni de façon identique et synchrone sous forme d'une fonction de vide réglé dans le temps durant une fenêtre de temps prédéfinie.

15. Procédé pour la production des cristaux de haute pureté selon le principe de contre-courant suivant la revendication 9 ou 10 est **caractérisé en ce que** la fonction de vide est réglé dans le temps de sorte que la cristallisation continue s'effectue après la formation primaire de germes cristallins grâce à la croissance de cristaux et une nouvelle formation de germes cristallins soit évitée.

16. Procédé pour la production des cristaux de haute pureté selon le principe de contre-courant suivant la revendication 9 ou 10 est **caractérisé en ce que** la fonction de vide de la phase de cristallisation d'une étape commence au point d'ébullition sous pression normale et est terminé au point d'ébullition prés de la température ambiante sous un vide correspondant.

17. Procédé pour la production des cristaux de haute pureté selon le principe de contre-courant suivant la revendication 9 ou 10 est **caractérisé en ce que** la chaleur d'évaporation est alimentée au volume de suspension durant une phase de chauffage avant la phase d'évaporation (phase de cristallisation).

18. Procédé pour la production des cristaux de haute pureté selon le principe de contre-courant suivant la revendication 9 ou 10 est **caractérisé en ce que** la phase de chauffage et la phase d'évaporation (phase de cristallisation) sont effectuées de forme alternante jusqu'à obtenir le rendement requise sur les étapes individuelles.

19. Procédé pour la production des cristaux de haute pureté selon le principe de contre-courant suivant la revendication 9 ou 10 est **caractérisé en ce que** les étapes de cristallisation R1 à Rn sont effectuées en parallèle jusqu'à obtenir la pureté requise dans les cristallisats.

20. Procédé pour la séparation des mélanges de matières en utilisant une combinaison de deux dispositifs suivant une ou plusieurs des revendications 1 à 8, qui sont utilisés dans le procédé suivant une ou plusieurs des revendications 9 à 19, un dispositif étant utilisé comme section de purification et l'autre dispositif comme section de récupération et le produit brut étant alimenté à un degré de pureté qui correspond à son degré d'impureté.
